Europäisches Patentamt

European Patent Office

Office européen des brevets

(19)

(11) Publication number:  0 051 441
A1

# (12) EUROPEAN PATENT APPLICATION

(21) Application number: 81305098.6

(22) Date of filing: 28.10.81

(51) Int. Cl.³: G 21 C 3/32

(30) Priority: 29.10.80 JP 150730/80

(43) Date of publication of application:
12.05.82 Bulletin 82/19

(84) Designated Contracting States:
AT BE CH DE FR GB IT LI LU NL SE

(71) Applicant: Hitachi, Ltd.
5-1, Marunouchi 1-chome
Chiyoda-ku Tokyo 100(JP)

(72) Inventor: Aoyama, Motoo
12-1 Ayukawacho-6-chome
Hitachi-shi(JP)

(72) Inventor: Kurihara, Kunitoshi
953-1 Takeda
Katsuta-shi(JP)

(72) Inventor: Takeda, Renzo
161 Ishinazakacho
Hitachi-shi(JP)

(74) Representative: Paget, Hugh Charles Edward et al,
MEWBURN ELLIS & CO. 2/3 Cursitor Street
London EC4A 1BQ(GB)

(54) Nuclear reactor and fuel assembly therefor.

(57) In a fuel assembly for a nuclear reactor, which assembly has a large number of fuel rods (8) arranged in a square lattice, the fuel rods (8) being so arranged that the ratio of cross-sectional areas of coolant passage (3) and fuel pellets (1) is at least 1.9:1, in any unit square (A) of the body of the lattice. The increased ratio of the coolant to fuel promotes thermalization of neutrons, resulting in effective utilization of uranium resource. The increased ratio may be achieved by using hollow pellets, by using pellets of a smaller diameter than normal, by having an increased inter-rod spacing, or any combination of these.

FIG I

NUCLEAR REACTOR AND FUEL ASSEMBLY THEREFOR

1 BACKGROUND OF THE INVENTION

The present invention relates to a fuel assembly for a nuclear reactor, and more particularly to a fuel assembly for a boiling water-type nuclear reactor.

In the boiling water-type nuclear reactor, fuel assemblies having a mean enrichment of about 3.0% by weight are burned up to a discharge burn-up of about 30 GWd/MT in the equilibrium cycle. In the current light water cooling-type nuclear reactor, higher burn-up of nuclear fuel is contemplated to effectively utilize the uranium resource. Furthermore, the increased discharge burn-up of fuel assembly can prolong a continuous operation period of a nuclear reactor and also can enhance the utilization of atomic power plant. The increased discharge burn-up of a fuel assembly requires an increased mean enrichment of a fuel assembly, but the increased enrichment requires much more natural uranium, and thus the effective utilization of uranium 235 becomes particularly important.

However, provision of fuel assemblies having a higher enrichment has the following problems.

The increased mean enrichment of fuel assembly correspondingly reduces the amount of a coolant for uranium 235, resulting in deteriorating the neutron-moderating effect and consequently hardening the neutron flux. Furthermore, the rate of increment in neutron infinite multiplication factor with respect to an increase in mean enrichment of fuel assembly (burn-up O GWd/MT) is also lowered. This is not preferable for the effective utilization of uranium fuel. The hardening of neutron flux gives rise to an increase in void coefficient and doppler factor and to a decrease in control rod value. These phenomena require a large change in the control system and safety system of a nuclear reactor.

SUMMARY OF THE INVENTION

An object of the present invention is to increase the utilization of uranium 235 in a highly enriched fuel by eliminating the disadvantages as mentioned above, and thereby to reduce the amount of uranium to be charged in the core of a nuclear reactor, and to provide a fuel assembly having a power coefficient and a control rod value on the same level as that of the currently available fuel assemblies.

Another object of the present invention is to increase an amount of a coolant for fuel, thereby thermalizing neutrons and consequently effectively utilizing the uranium resource.

The present invention provides a fuel assembly having a large number of fuel rods arranged in a square lattice and being charged in a core of a nuclear reactor, which comprises the fuel rods being arranged in a ratio of cross-sectional area of coolant passage to cross-sectional area of fuel pellets of at least 1.9 in the cross-section of unit fuel rod lattice defined by a zone surrounded by 4 straight lines each connecting two adjacent centers of four fuel rods arranged at four corners of a given unit square lattice on a cross-sectional plane vertical to the axial direction of the fuel assembly.

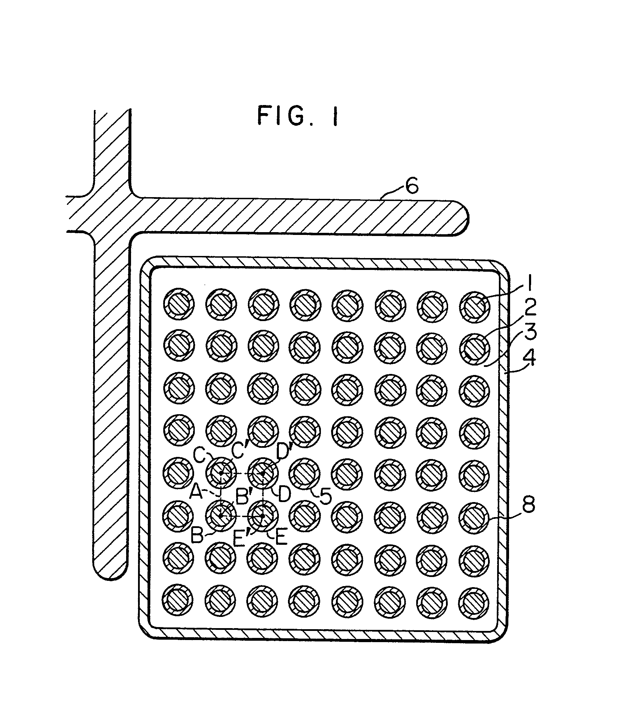

Cross-sectional structure of a fuel assembly having a large number of fuel rods to be used in the present invention is shown in Fig. 1, which comprises 8 x 8 fuel rods $8$ and one channel box $4$. Fuel rods $8$ are supported by an upper tie plate and a lower tie plate (both not shown in Fig. 1) at their upper and lower ends. Channel box $4$ is fixed to the upper tie plate, and surrounds the bundle of fuel rods $8$. Each of fuel rods $8$ has a large number of fuel pellets 1 filled in cladding $2$. There are coolant passages $3$, through which a coolant flow, among fuel rods $8$ in channel box $4$. Numeral $6$ is a control rod, and numeral $5$ is a water rod.

The cross-section of unit fuel rod lattice is a square zone $\underline{A}$ surrounded by 4 lines $\overline{B'C'}$, $\overline{C'D'}$, $\overline{D'E'}$ and $\overline{E'B'}$, each connecting two adjacent centers among centers B', C', D', and E' of 4 fuel rods B, C, D, and E, respectively, arranged at 4 corners of a given unit square lattice in Fig. 1.

The ratio of cross-sectional area of coolant passage to cross-sectional area of fuel pellets means a ratio of the cross-sectional area of a coolant passage to the cross-sectional area of fuel pellets in the cross-section of unit fuel rod lattice, which will be hereinafter referred to merely as "cross-sectional ratio".

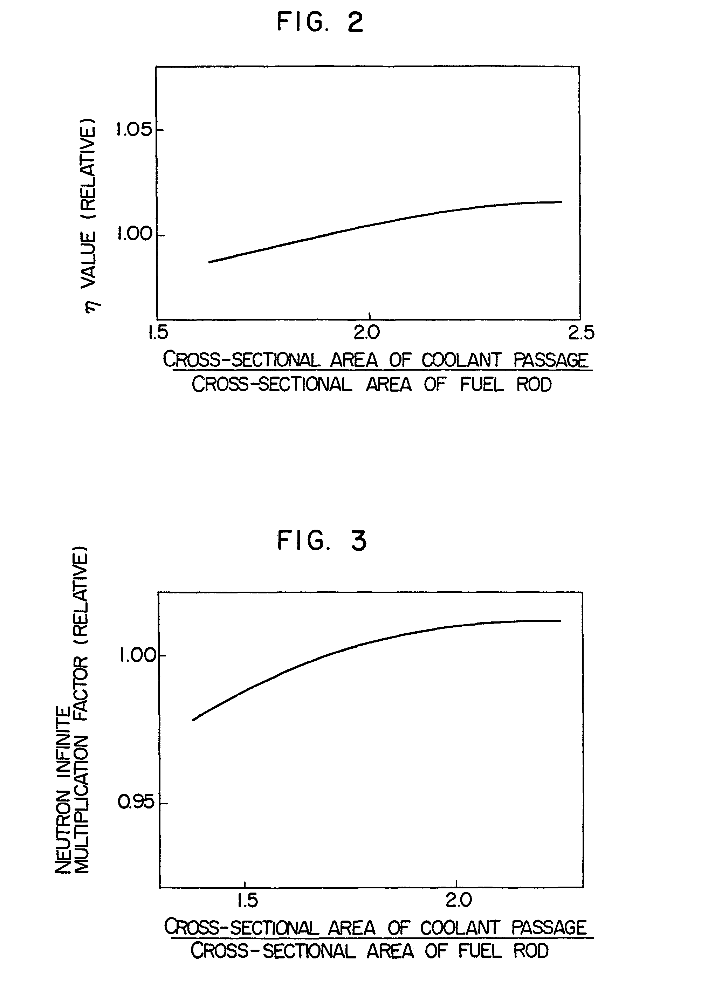

In a core with a larger cross-sectional ratio, thermalization, that is, moderation, of neutrons proceeds, and neutrons in the thermal neutron zone, which have a small α value of uranium 235 ( α value being ratio of capturing cross-sectional area to nuclear fission cross-sectional area) are increased in number. Thus, η value (an average of numbers of neutrons emitted per thermal neutron absorbed in fuel) is increased, as shown in Fig. 2, and consequently the neutron infinite multiplication factor is increased.

Fig. 3 shows relations between the neutron infinite multiplication factor (0 GWd/MT) and the cross-sectional ratio.

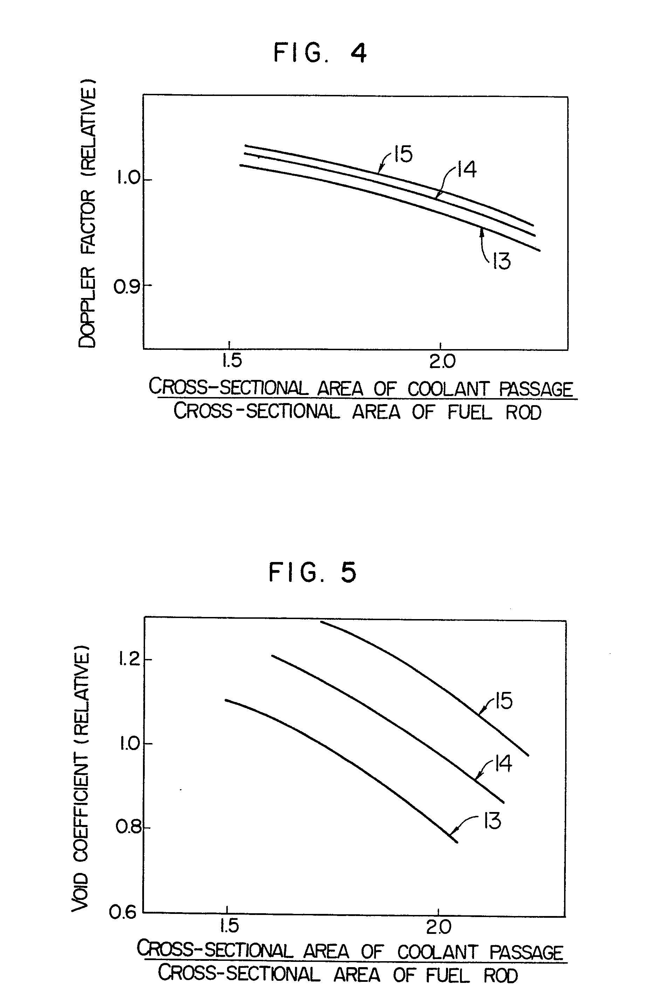

With progress in thermalization of neutrons, doppler factor and void coefficient are decreased, as shown in Figs. 4 and 5.

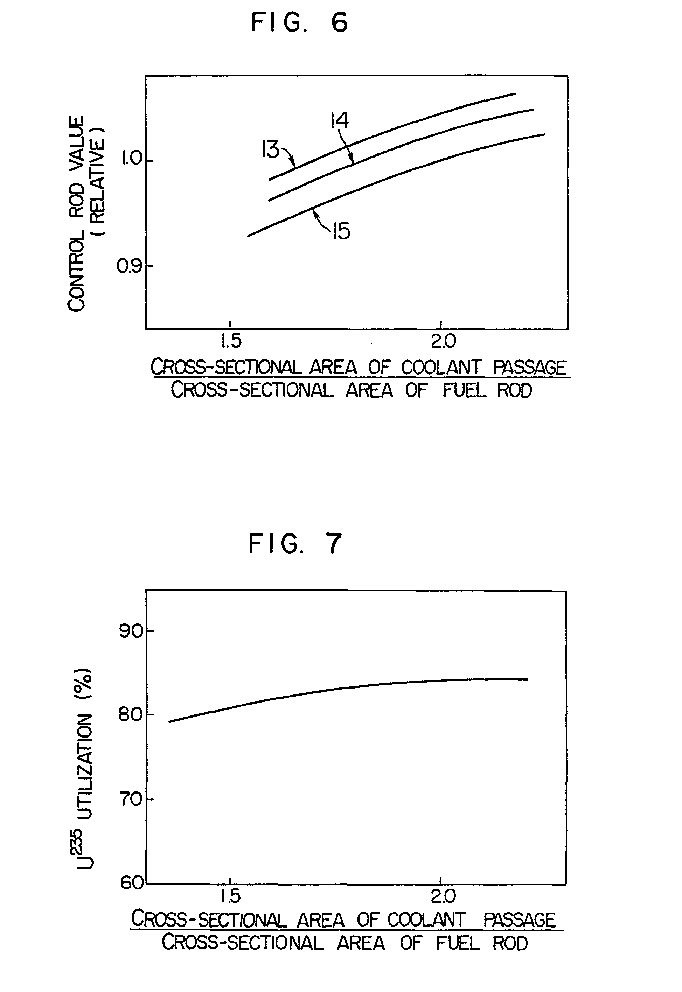

Fig. 6 shows relation between the control rod value and the cross-sectional ratio. In Figs. 4, 5 and 6, curves 13, 14 and 15 show characteristics of fuel assemblies with mean enrichments of uranium 235, 3% by weight, 4% by weight, and 5% by weight, respectively.

The fuel assemblies so far employed have the cross-sectional ratio of 1.59 at an enrichment of 2.19% by weight (Browus Ferry nuclear reactor) [El-Wakil, M.M.; Nuclear Energy Conversion, published by Thomas Y. Crowell Company, Inc. (1971)], and the cross-sectional ratio of 1.61 at an enrichment of 2.74% by weight (Caorso nuclear reactor) [Olioa, G; Tondinelli, L: neutronics aspect of the recycling of transuranium elements by burnup in an actual light water reactor, At Energy Rep. Italy, (RT/FI (78) 21) p 67 (1978)], and the cross-sectional ratio of 1.71 at a mean enrichment of about 3% by weight.

When the void coefficient, doppler factor and control rod value of the fuel assembly having the cross-sectional ratio of 1.71 at a mean enrichment of about 3% by weight are deemed to be desired levels and when the same levels are to be obtained in the fuel assemblies with enrichments of 4% by weight and 5% by weight, it is obvious from Figs. 4, 5 and 6 that the cross-sectional ratio should be at least 1.9, which is the value at the cross-point with curve 14 obtained by plotting a straight line from 1.71 on the axis of abscissa upwardly in parallel with the axis of ordinate to curve 13, and then plotting a straight line horizontally from the cross-point of curve 13 in parallel with the axis of abscissa to curve 14.

The present invention is based on the finding of that new fact. By using a fuel assembly with the cross-sectional ratio of at least 1.9 according to the present invention, the following effects can be obtained.

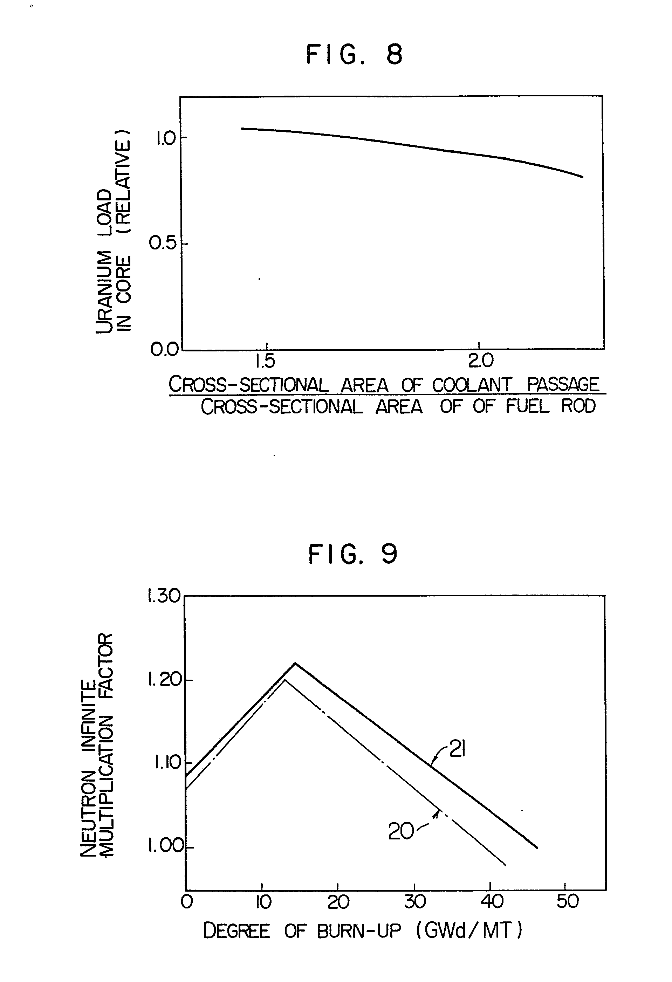

The higher the cross-sectional ratio, the better the utilization of uranium 235, that is, the ratio of burnt uranium 235 to charged uranium 235, as shown in Fig. 7. The higher the cross-sectional ratio, the lower the uranium load, as shown in Fig. 8 and thus, a core with the same performance level as in the core so far used can be obtained with a reduced uranium load. The reduced uranium load in core can reduce a load for reprocessing.

The cross-sectional ratio can be increased by any or a combination of the following steps:

(1)     by using fuel rods with smaller diameter (that is, by using the pellets with smaller diameter as fuel rods),

(2)     by using hollow pellets as fuel rods), or

(3)     by making distances between the adjacent fuel rods larger.

The present invention is applicable to the conventional fuel assemblies for a boiling water-type nuclear reactor with a mean enrichment of about 3% by weight. By using the cross-sectional ratio of at least 1.9, a more stable nuclear reactor operation can be attained with less uranium load in the core.


BRIEF DESCRIPTION OF THE DRAWINGS

Fig. 1 is a horizontal cross-sectional view of a fuel assembly with 8 x 8 fuel rods including one water rod, applicable to a boiling water-type nuclear reactor.

Fig. 2 is a characteristic diagram showing relations between the $\eta$ value and the cross-sectional ratio.

Fig. 3 is a characteristic diagram showing relations between the neutron infinite multiplication factor and the cross-sectional ratio.

Figs. 4, 5 and 6 are characteristic diagrams each showing relations of doppler factor, void factor, or control rod value to the cross-sectional ratio.

Fig. 7 is a characteristic diagram showing relations between the utilization of uranium 235 and the cross-sectional ratio.

Fig. 8 is a characteristic diagram showing relations between the uranium load in a core and the cross-sectional ratio.

Fig. 9 is a characteristic diagram showing dependency of neutron infinite multiplication factor of the fuel assembly according to the present invention in Example 1 and that according to the conventional fuel assembly upon the degree of burnup.

The present invention will be described in detail below, referring to Examples.

PREFERRED EMBODIMENTS OF THE INVENTION

Example 1

The present Example 1 shows an embodiment of using said second step (using hollow pellets) in the fuel assembly shown in Fig. 1.

For the fuel assembly according to Example 1 (fuel assembly II), a mean enrichment was selected so that the same separate work unit could be obtained as that for the conventional fuel assembly (fuel assembly I in Table 1).

In Table 1, major dimensions of fuel assemblies I and II are given.

When fuel assembly II was used in the core of a boiling water-type nuclear reactor, the same performance level as in the conventional reactor core could be obtained with the same number of fuel rods in fuel assembly II as in fuel assembly I.

In Table 2, the void coefficient, doppler factor, control rod value, and discharge burn-up of fuel assemblies I and II are shown:

Table 1

|  | Fuel assembly I | Fuel assembly II |
|---|---|---|
| Mean enrichment (wt. %) | 2.77 | 2.96 |
| Cross-sectional ratio | 1.71 | 2.05 |
| Diameter of fuel rod (relative) | 1.0 | 1.0 |
| Uranium load in core (relative) | 1.0 | 0.90 |
| Natural uranium requirement (relative per unit output) | 1.0 | 0.96 |
| Type of fuel assembly | 8 x 8 | 8 x 8 |

Table 2

|  | Fuel assembly I | Fuel assembly II |
|---|---|---|
| Void coefficient (Relative) | 1.0 | 0.88 |
| Doppler factor (Relative) | 1.0 | 0.98 |
| Control rod value (relative) | 1.0 | 1.04 |
| Discharge burnup (GWd/MT) | 28.0 | 31.0 |

The fuel assembly having 8 x 8 (= 64) fuel rods including one water rods has the structure as shown in Fig. 1.

For fuel assembly II, hollow pellets each having an outer diameter of 10.31 mm and an inner diameter of 3.35 mm were used at the cross-sectional ratio of 2.05, whereas for fuel assembly I, solid pellets each having a diameter of 10.31 mm were used at the cross-sectional ratio of 1.71. As a result, the uranium load in core according to fuel assembly II could be made smaller by 10% than that according to fuel assembly I, and also the reprocessing load could be reduced.

It was found that fuel assembly II could effectively utilize uranium 235, and the natural uranium requirements per unit output could be made smaller by 4% than that of fuel assembly I.

It was further found that the output coefficient of fuel assembly II was smaller than that of fuel assembly I, and a more stable nuclear reactor operation with a high control rod value could be realized.

Example 2

The present Example 2 shows an embodiment according to a combination of said first step (using fuel rods with smaller diameter) and said second step (using hollow pellets). A mean enrichment of about 4% by weight was selected for the fuel assembly to make the burnup higher than that of fuel assembly I.

In Example 2, the same output level as in the core now used could be obtained in continuous operation for 15 months by exchanging one-third of the total fuel at one time. In Table 3, major dimensions of fuel assembly III according to the present invention, and those of the conventional fuel assembly having the same separate work unit as in fuel assembly III are shown. In Table 4, void coefficient, doppler factor, control rod value, and discharge burnup of fuel assemblies III and IV are shown.

Fuel assembly III had fuel rods with the diameter by 5% smaller than that of fuel rods of fuel assembly I (that is, smaller pellet diameter), with hollow pellets of inner diameter of 3.18 mm. Consequently, the cross-sectional ratio of fuel assembly III was 2.29, and the uranium load in core could be made smaller by 19%, and also the reprocessing load could be reduced.

Table 3

| | Fuel assembly III | Fuel assembly IV |
|---|---|---|
| Mean enrichment (wt. %) | 4.08 | 3.46 |
| Cross-sectional ratio | 2.29 | 1.71 |
| Diameter of fuel rod (Relative*) | 0.95 | 1.0 |
| Uranium load in core (relative*) | 0.81 | 1.0 |
| Natural uranium requirement (relative per unit output*) | 0.97 | 1.02 |
| Type of fuel assembly | 8 x 8 | 8 x 8 |

* on the basis of fuel assembly I

Table 4

| | Fuel assembly III | Fuel assembly IV |
|---|---|---|
| Void coefficient (relative*) | 0.96 | 1.16 |
| Doppler factor (relative*) | 0.93 | 1.00 |
| Control rod value (relative*) | 1.05 | 0.98 |
| Discharge burnup (GWd/MT) | 43.3 | 35.0 |

* on the basis of fuel assembly I

It was found that fuel assembly III could effectively utilize uranium 235 with an increased discharge burnup. Thus, the natural uranium requirement per unit output could be made smaller by 3% than fuel assembly I. Furthermore, the health of fuel could be improved by using the hollow pellets. The void coefficient was greatly different between fuel assemblies I and IV, but could be made better by about 20% than that of fuel assembly IV, and the control rod value was also made higher by 7% than that of fuel assembly IV.


Example 3

The present Example 3 shows an embodiment according to said first step (using fuel rods with smaller diameter). A mean enrichment of about 5% by weight was selected for the present embodiment (fuel assembly V) to make the burnup higher than that of fuel assembly III. Continuous reactor operation for 18 months could be attained with fuel assembly V by exchanging one-fourth of the total fuel at one time.

In Table 5, major dimensions of fuel assembly V and conventional fuel assembly VI having the same separate work unit as in fuel assembly V are shown. In Fig. 9 burnup characteristics of fuel assemblies V and VI for neutron infinite multiplication factor are shown, where curve 20 shows the characteristics of fuel assembly VI and curve 21 shows that of fuel assembly V.

When fuel assemblies V were used in the core with the same number of fuel rods as that for fuel assembly VI (that is, the same as that for fuel assembly I), the same performance level as that in the core with fuel assemblies I could be obtained. In Table 6, void coefficient, doppler factor, control rod value and discharge burnup of fuel assemblies V and VI are shown.

Fuel assembly V had the cross-sectional ratio of 2.12 by making the pellet diameter by 6% smaller than that (10.31 mm) for fuel assembly I. That is, the pellet diameter for fuel assembly V was smaller than that for fuel assembly VI. Consequently, the uranium load in core could be made by 12% smaller, and also the reprocessing load was reduced. The natural uranium requirement per unit output of fuel assembly V was by 4% smaller than that of fuel assembly VI, and by 13% smaller than that of fuel assembly I. This was due to the increased discharge burnup. The void coefficient and the control rod value were greatly different between fuel assemblies VI and I, but the void coefficient is made by about 20% better and the fuel rod value by about 5% better.

Table 5

| | Fuel assembly V | Fuel assembly VI | Fuel assembly VII (Ex. 4) |
|---|---|---|---|
| Mean enrichment (wt. %) | 5.35 | 4.85 | 5.76 |
| Cross-sectional ratio | 2.12 | 1.71 | 2.29 |
| Diameter of fuel rod (relative*) | 0.94 | 1.0 | 0.95 |
| Uranium load in core (relative*) | 0.88 | 1.0 | 0.81 |
| Natural uranium requirement (relative per unit output*) | 0.87 | 0.91 | 0.86 |
| Type of fuel assembly | 8 x 8 | 8 x 8 | 8 x 8 |

*: on the basis of fuel assembly I.

Table 6

| | Fuel assembly V | Fuel assembly VI | Fuel assembly VII (Ex. 4) |
|---|---|---|---|
| Void coefficient (relative*) | 1.13 | 1.31 | 1.12 |
| Doppler factor (relative*) | 0.98 | 1.02 | 0.96 |
| Control rod value (relative*) | 1.00 | 0.95 | 1.02 |
| Discharge burnup (GWd/MT) | 63.4 | 56.0 | 69.3 |

*: on the basis of fuel assembly I

Example 4

The present Example 4 shows an embodiment according to a combination of said first step (using fuel rods with smaller diameter) and said second step (using hollow pellets). The mean enrichment was selected for the present embodiment (fuel assembly VII) so as to have the same separate work unit as for fuel assemblies V and VI. The major dimensions of fuel assembly VII are shown in Table 5. When fuel assemblies VII were used in a core with the same number of fuel rods as in fuel assemblies VI, the same performance level as in the core with fuel assemblies I could be obtained. In Table 6, the void coefficient, doppler factor, control rod value, and discharge burnup of fuel assembly VII are shown.

Fuel assembly VII had the cross-sectional ratio of 2.29 by making the fuel rod diameter by 5% smaller than that for fuel assembly I and using hollow pellets having a ratio of pellet outer diameter to inner diameter of about 3.1. Consequently, the uranium load in core could be made by 19% smaller than in fuel assembly I, and also the reprocessing load could be reduced.

In fuel assembly VII, uranium 235 could be effectively utilized and discharge burnup was enhanced, resulting in reduction of the natural uranium requirement per unit output by 14%, as compared with that of fuel assembly I. Furthermore, the health of fuel could be much improved by using the hollow pellets. The void coefficient and doppler factor could be made by 1 - 2% smaller than those of fuel assembly V, and the control rod value could be made higher by 2% on the other hand.

The present invention can be also applied to a pressurized water-type nuclear reactor.

According to the present invention, the uranium load in a nuclear reactor core can be reduced by enhancing the utilization of uranium 235 in a highly enriched fuel, and a fuel assembly with the same level of output coefficient and control rod value as in the conventional fuel assembly I can be obtained.

CLAIMS

1.     A fuel assembly for a nuclear reactor core, the assembly having fuel rods (8) containing fuel pellets (1) and arranged in a square array within a coolant passage (3), characterized in that:

on a section perpendicular to the axial direction of the assembly, the cross-sectional areas of the coolant passage (3) and of the fuel pellets (1) in any unit square of the array having corners at the centres of adjacent fuel rods are in a ratio of at least 1.9:1.

2.     A fuel assembly according to claim 1 suitable for a core of a boiling water type reactor which uses light water as a coolant.

3.     A fuel assembly according to claim 1 or claim 2 having hollow pellets (1) in the fuel rods (8).

4.     A fuel assembly according to claim 1, claim 2 or claim 3 in which the fuel pellets (1) have a diameter of less than 10.31 mm.

5.     A nuclear reactor having a core charged with a fuel assembly according to any preceding claim.

FIG. 1

FIG. 2

η VALUE (RELATIVE)

1.05

1.00

1.5                    2.0                    2.5

CROSS-SECTIONAL AREA OF COOLANT PASSAGE
CROSS-SECTIONAL AREA OF FUEL ROD

FIG. 3

NEUTRON INFINITE
MULTIPLICATION FACTOR (RELATIVE)

1.00

0.95

1.5                    2.0

CROSS-SECTIONAL AREA OF COOLANT PASSAGE
CROSS-SECTIONAL AREA OF FUEL ROD

FIG. 4

$$\frac{\text{CROSS-SECTIONAL AREA OF COOLANT PASSAGE}}{\text{CROSS-SECTIONAL AREA OF FUEL ROD}}$$

FIG. 5

$$\frac{\text{CROSS-SECTIONAL AREA OF COOLANT PASSAGE}}{\text{CROSS-SECTIONAL AREA OF FUEL ROD}}$$

FIG. 6

CONTROL ROD VALUE (RELATIVE)

13

14

15

1.0

0.9

1.5

2.0

CROSS-SECTIONAL AREA OF COOLANT PASSAGE
CROSS-SECTIONAL AREA OF FUEL ROD

FIG. 7

U²³⁵ UTILIZATION (%)

90

80

70

60

1.5

2.0

CROSS-SECTIONAL AREA OF COOLANT PASSAGE
CROSS-SECTIONAL AREA OF FUEL ROD

FIG. 8

FIG. 9

0051441

**European Patent Office**

**EUROPEAN SEARCH REPORT**

Application number

EP 81 30 5098

| DOCUMENTS CONSIDERED TO BE RELEVANT | | | CLASSIFICATION OF THE APPLICATION (Int. Cl. ³) |
|---|---|---|---|
| Category | Citation of document with indication, where appropriate, of relevant passages | Relevant to claim | G 21 C 3/32 |
| XY | US - A - 3 227 621 (B.T.A. HARGO et al.)<br><br>* Column 2, lines 34-51; claim 1; figures 1-3 *<br><br>-- | 1,5 | |
| XY | FR - A - 1 285 565 (GENERAL ELECTRIC)<br><br>* Page 3, right-hand column, lines 18-41; page 5, left-hand column, lines 50-61; right-hand column, lines 1-45; figure 4 *<br><br>-- | 1,2,5 | **TECHNICAL FIELDS SEARCHED (Int.Cl. ³)** |
| XY | US - A - 3 105 026 (J.J. DICKINSON)<br><br>* Column 3, paragraph F; column 5, lines 16-20; figures 2,4-7 *<br><br>-- | 1,2,5 | G 21 C 3/32<br> 15/06 |
| Y | US - A - 3 158 549 (W.D. FOWLER)<br><br>* Column 2, lines 34-54; tables 1.1, 1.3; figures 1-5 *<br><br>-- | 1,2,4 | |
| Y | DE - B - 1 141 033 (U.K.A.E.A.)<br><br>* Column 2, lines 51-52; column 3, lines 1-12; figure 4 *<br><br>-- | 3 | **CATEGORY OF CITED DOCUMENTS** |
| Y | US - A - 3 749 640 (S.L. ISRAEL)<br><br>* Column 3, lines 7-24 *<br><br>---- | 4 | X: particularly relevant if taken alone<br>Y: particularly relevant if combined with another document of the same category<br>A: technological background<br>O: non-written disclosure<br>P: intermediate document<br>T: theory or principle underlying the invention<br>E: earlier patent document, but published on or after the filing date<br>D: document cited in the application<br>L: document cited for other reasons |
| | The present search report has been drawn up for all claims | | &: member of the same patent family,<br>corresponding document |
| Place of search<br>The Hague | Date of completion of the search<br>08-02-1982 | Examiner<br>ASSI | |

EPO Form 1503.1  06.78